(19) Europäisches Patentamt

European Patent Office

Office européen des brevets

(11) **EP 1 583 357 A2**

(12) **EUROPEAN PATENT APPLICATION**

(43) Date of publication:
**05.10.2005 Bulletin 2005/40**

(51) Int Cl.⁷: **H04N 5/335**

(21) Application number: **05006210.8**

(22) Date of filing: **22.03.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **30.03.2004 JP 2004099050**

(71) Applicants:
• **Yachida, Masahiko
  Amagasaki-shi, Hyogo 661-0002 (JP)**
• **Eizoh Co., Ltd.
  Amagasaki-shi, Hyogo 661-0002 (JP)**

(72) Inventors:
• **Yachida, Masahiko
  Amagasaki-shi Hyogo 661-0002 (JP)**
• **Iwai, Yoshio
  Toyonaka-shi Osaka 560-0034 (JP)**
• **Nagahara, Hajime
  Toyonaka-shi Osaka 560-0044 (JP)**
• **Yachida, Masatsugu
  Amagasaki-shi Hyogo 661-0981 (JP)**

(74) Representative:
**Pautex Schneider, Nicole Véronique et al
Novagraaf International SA
25, avenue du Pailly
1220 Les Avanchets - Geneva (CH)**

(54) **Imaging system, image data stream creation apparatus, image generation apparatus, image data stream generation apparatus, and image data stream generation system**

(57)      An imaging system that is capable of generating high resolution and high frame rate video is comprised of a beam splitter 42, two lenses 44, a high resolution-low frame rate camera 28, and a low resolution-high frame rate camera 30. The beam splitter 42 reflects a part of an incident ray. The two lenses 44 gather the ray reflected from the beam splitter 42 and the ray penetrating the beam splitter 42, respectively. The low resolution-high frame rate camera 30 is a sensor that takes an image of the ray gathered by one of the lenses 44 at a low resolution and a high frame rate. The high resolution-low frame rate camera 28 is a sensor that takes an image of the ray gathered by the other of the lenses 44 at a high resolution and a low frame rate.

FIG. 1

## Description

## BACKGROUND OF THE INVENTION

## (1) Field of the Invention

The present invention relates to an imaging system, an image data stream creation apparatus, an image generation apparatus, an image data stream generation apparatus, and an image data stream generation system. More particularly, the present invention relates to an imaging system, an image data stream creation apparatus, an image generation apparatus, an image data stream generation apparatus, and an image data stream generation system that handle two image data streams with the same field-of-view.

## (2) Description of the Related Art

There is a strong demand for improving the resolution of video. However, the size of image data seriously increases along with such improvement in video resolution. For this reason, high transfer capability and large storage capacity are required for data distribution/transmission and data archiving that are carried out via a network and broadcasting. Under these circumstances, it is difficult to achieve the improvement of video resolution.

In terms of resolution, a high resolution camera is about four times higher than a typical National Television Standards Committee (NTSC) camera (for example, see Japanese Laid-Open Patent application No. 08-331441), but in terms of cost, a high resolution camera or even its peripheral device is incomparably higher than an NTSC camera. When a user wishes to obtain a camera with a higher resolution than that of a high resolution camera, it is difficult to do so since such a camera is not available on the market and its cost is unrealistically high.

While NTSC-class cameras (640 by 480 pixels, 30 frames per second) have long been used as typical video cameras capable of moving image input, new high resolution cameras appear on the market one after another along with a rapid advancement and sophistication of digital cameras. Some of them feature a resolution of 4000 by 4000 pixels.

For the compression of a high resolution moving image, a moving image compression method such as MPEG (Moving Picture Experts Group) is typically used. According to the MPEG standard, a high resolution moving image is compressed by transforming such moving image into discrete high resolution frames (I (Intra) frame), predictive images (P (Predictive) frame and B (Bidirectionally predictive) frame), and compensation information and difference information required for such predictive images. In other words, the MPEG standard makes it possible to reproduce a high resolution moving image at a low data rate, using low frame rate and high resolution information and high frame rate motion estimation information.

However, there is a problem that it is difficult to achieve real-time imaging due to the fact that a frame rate becomes lower as the resolution of a video camera and a digital still camera becomes higher. In the case of a camera with a resolution of 4000 by 4000 pixels, for example, its imaging speed is currently one frame per second. In fact, the resolution of most video cameras capable of real-time image input (30 frames per second) is of NTSC class (640 by 480 pixels). There is therefore a problem that it is difficult to provide a camera at a low cost that is capable of generating high resolution and high frame rate video.

Furthermore, since the amount of data generated by a conventional high frame rate and high resolution imaging method is enormous, not only a camera itself but also its peripheral devices such as recording equipment, edition equipment, and distribution equipment are also required to be capable of handling a large amount of data. Stated another way, a conventional method for imaging a high resolution moving image has a problem also in terms of image storage, image compression and image transfer due to the amount of data to be generated.

## SUMMARY OF THE INVENTION

The present invention has been conceived in view of the above problems, and it is a first object of the present invention to provide, at a low cost, an imaging system, an image generation apparatus, an image data stream generation apparatus, and an image data stream generation system that are capable of generating high resolution and high frame rate video.

A second object of the present invention is to provide an image data stream creation apparatus that is capable of performing compression and transfer of moving images in an efficient manner.

In order to achieve the above objects, the imaging system related to one aspect of the present invention is an imaging system, including: a first image data stream generation unit that generates a first image data stream with a first resolution at a first frame rate; and a second image data stream generation unit that generates a second image data stream with a second resolution at a second frame rate, the second resolution being equal to or higher than the first resolution, and the second frame rate being equal to or lower than the first frame rate, wherein a field-of-view of the first image data stream generation unit is same as a field-of-view of the second image data stream generation unit.

With the above structure, it is possible to take images so that the first image data stream (low resolution and high frame rate image data stream) and the second image data stream (high resolution and low frame rate image data stream) have the same field-of-view. By performing image processing on a synthesized two image data streams, it becomes possible to generate high resolution and high frame rate video. While the number of processing units is larger by being equipped with the first image data stream generation unit and the second image data stream generation unit than in the case of using a camera capable of taking images of high resolution and high frame rate image data streams, it costs less from an overall standpoint. Thus, it is possible for the present invention to provide, at a low cost, an imaging system for generating high resolution and high frame rate video.

The above imaging system may further include an omnidirectional visual sensor that gathers omnidirectional incident rays, wherein the first image data stream generation unit and the second image data stream generation unit generate the first image data stream and the second image data stream, respectively, from the incident rays gathered by the omnidirectional visual sensor.

Accordingly, it becomes possible to provide, at a low cost, an imaging system for generating a high resolution panoramic image and perspective projective transform image (an image to be taken by an ordinary camera).

The above imaging system may further include a distribution unit that distributes the first image data stream and the second image data stream to outside.

The resolution of the first image data stream is high, but its data amount is small since its frame rate is low. Meanwhile, the frame rate of the second image data stream is high, but its data amount is small since its resolution is low. Thus, it is possible for the present invention to reduce the amount of data to be distributed to outside, thereby enabling video distribution and real-time distribution to be carried out over a low-speed communication line.

The above imaging system may further include a storage unit that stores the first image data stream and the second image data stream.

The amount of data of the first image data stream and second image data stream is small as mentioned above. This allows for the reduction in the storage capacity of the storage unit, as well as for an inexpensive moving image storage.

The image data stream creation apparatus related to another aspect of the present invention is an image data stream creation apparatus that creates, from a predetermined image data stream, two image data streams with different frame rates or resolutions, the apparatus including: a first image data stream creation unit that creates, from the predetermined image data stream, a first image data stream with a first resolution at a first frame rate; and a second image data stream creation unit that creates, from the predetermined image data stream, a second image data stream with a second resolution at a second frame rate, the second resolution being equal to or higher than the first resolution, and the second frame rate being equal to or lower than the first frame rate.

Although the data amount of the predetermined image data stream (high resolution and high frame rate image data stream) is large, the data amount of the first image data stream and second image data stream is small. This allows for an efficient storage of moving images.

In the above image data stream creation apparatus, the first resolution and the second frame rate may be the same as a resolution and a frame rate of the predetermined image data stream, respectively.

By performing image processing on a synthesized two image data streams, it becomes possible to generate video that is equivalent to the predetermined image data stream.

The above image data creation apparatus may further include a distribution unit that distributes the first image data stream and the second image data stream to outside.

The amount of data of the first image data stream and second image data stream is small as mentioned above. This allows for an efficient transfer of moving images.

The image generation apparatus related to further another aspect of the present invention is an image generation apparatus that generates a new image data stream from two image data streams with different frame rates and resolutions but with a same field-of-view, the apparatus including: a motion information extraction unit that extracts motion information from a first image data stream with a first frame rate and a first resolution; a motion information estimation unit that estimates, based on the extracted motion information of the first image data stream, motion information of image data of a frame that is not included in a second image data stream with a second frame rate and a second resolution, the second frame rate being equal to or lower than the first frame rate, the second resolution being equal to or higher than the first resolution, and the image data having the second resolution; and an image data generation unit that generates the image data of the frame that is not included in the second image data stream based on the second image data stream and the motion information estimated by the motion information estimation unit, the image data having the second resolution.

According to the above structure, motion information is extracted from the first resolution image data stream with a high frame rate, and motion information of the second image data stream is then estimated based on such extracted motion information. This makes it possible to obtain accurate motion information. Meanwhile, the resolution of the second image data stream is higher than that of the first image data stream. Thus, by generating image data based on the motion information of the first image data stream and on the second image data stream, it becomes possible to generate a high resolution and high frame rate image data stream.

In the above image generation apparatus, the motion information extraction unit may extract the motion information from the first image data stream using a phase correlation method, the motion information estimation unit may include: a high resolution frequency component extraction unit that extracts a frequency signal component of the second image data stream by performing frequency transform on the second image data stream; a difference image generation unit that generates a difference image based on the motion information of the first image data stream, the first image data stream, and the second image data stream, the difference image being a difference between the image data of the frame that is not included in the second image data stream and image data of a frame that is included in the second image data stream; a difference image frequency component extraction unit that extracts a frequency signal component of the difference image by performing the frequency transform on the difference image; and a motion compensation unit that performs motion compensation for the image data of the frame that is not included in the second image data stream by determining a frequency signal component of the image data of the frame that is not included in the second image data stream based on the frequency signal component of the second image data stream and the frequency signal component of the difference image, the image data having the second resolution, and the image data generation unit may include: a low resolution frequency component extraction unit that extracts a frequency signal component of the first image data stream by performing the frequency transform on the first image data stream; a synthesis unit that synthesizes the frequency signal component of the motion-compensated image data with the second resolution and the frequency signal component of the first image data stream; and an inverse frequency transform unit that performs inverse transform of the frequency transform on a frequency signal component obtained by the synthesis performed by the synthesis unit.

According to the above structure, a high resolution and high frame rate image data stream is obtained by synthesizing the two image data streams in the frequency domain. This allows for an easy hardware implementation as well as for high-speed processing. Thus, it becomes possible for the present invention to provide an image generation apparatus at a low cost.

In the above image generation apparatus, the motion information extraction unit may include: a first dynamic area extraction unit that extracts dynamic areas from the first image data stream; a second dynamic area extraction unit that extracts a dynamic area and a background area from the second image data stream; and a transform matrix estimation unit that estimates an Affine transform matrix for the dynamic areas of the first image data stream based on the extracted dynamic areas of the first image data stream, the motion information estimation unit may perform an operation using the Affine transform matrix on the dynamic area of the second image data stream, and may generate a dynamic area in the frame that is not included in the second image data stream, and the image data generation unit may superimpose the dynamic area estimated by the motion information estimation unit onto the background area extracted from the second image data stream by the second dynamic area extraction unit.

According to the above structure, the motion of dynamic areas is represented by an Affine transform matrix. This makes it possible to obtain a high resolution and high frame rate image data stream even in the case where the shape of a dynamic area changes.

In the above image generation apparatus, the motion information extraction unit may include: a characteristic point extraction unit that extracts characteristic points from image data of each of frames included in the first image data stream; and a motion vector extraction unit that associates the characteristic points between the frames, and extracts motion vectors, the motion information estimation unit may interpolate motion vectors of the frame that is not included in the second image data stream based on the motion vectors extracted by the motion vector extraction unit, and the image data generation unit may include: a polygon division unit that applies the characteristic points extracted by the characteristic point extraction unit to the second image data stream, and obtains each area formed by connecting the characteristic points as a polygon area; a dynamic area generation unit that performs morphing on the polygon area obtained by the polygon division unit based on the motion vectors estimated by the motion information estimation unit, and generates a dynamic area of the frame that is not included in the second image data stream; a background area extraction unit that extracts a background area from the second image data stream; and a superimposition unit that superimposes the dynamic area generated by the dynamic area generation unit onto the background area extracted by the background area extraction unit.

According to the above structure, the shape of a polygon and motion information are obtained from the first image data stream with a high frame rate, making it possible to obtain accurate motion information. Meanwhile, the texture information inside the polygon is obtained from the second image data stream, and such polygon is transformed by means of morphing. This makes it possible to obtain a dynamic area with high resolution, and thus to obtain a high resolution and high frame rate image data stream. The use of morphing makes it easier to track the changes of a dynamic area.

For a non-rigid object, it is difficult to establish an association between characteristic points. However, according to the above structure, characteristic points are associated with each other based on the first image data stream that has been sampled at a high frame rate. This makes it possible to associate characteristic points in an accurate manner by establishing an association between neighboring frames, even in the case of a non-rigid object whose dynamic area changes in shape.

Preferably, the first image data stream and the second image data stream are generated in the imaging system described in one of Claims 1 to 5.

According to the above structure, two image data streams are obtained in the imaging system. This structure of taking images of two image data streams separately leads to the reduction in the amount of data. It is an efficient way of taking images since there is no need for compressing the image data streams in advance as is required for MPEG, for example, and thus there is no need for spending time for data compression at the time of distributing real-time video or the like. It is of course possible to further reduce the amount of data by compressing the two image data streams using MPEG or the like.

The image data stream generation system according to further another aspect of the present invention is an image data stream generation system for generating a new image data stream from two image data streams with different frame rates and resolutions but with a same field-of-view, the system including: an image data stream distribution apparatus that distributes the two image data streams; and an image data stream generation apparatus, according to one of Claims 11 to 18, that is connected to the image data stream distribution apparatus, wherein the image data stream distribution apparatus is one of the imaging system according to Claim 5 and the image data stream creation apparatus according to Claim 9.

The image data stream generation apparatus used in the above system is capable of generating high resolution and high frame rate video. Thus, the image data stream generation system using the same is also capable of providing the same effect.

The image data stream generation system according to further another aspect of the present invention is an image data stream generation system for generating a new image data stream from two image data streams with different frame rates and resolutions but with a same field-of-view, the system including: a distribution apparatus that distributes one of the two image data streams and motion information obtained from the other of the image data streams; and an image data stream generation apparatus that generates the new image data stream based on the motion information and the one of the two image data streams distributed from the distribution apparatus, wherein the distribution apparatus may include: an imaging system according to one of Claims 1 to 6; a motion information extraction unit that extracts the motion information from a first image data stream obtained in the imaging system; and a distribution unit that distributes the motion information extracted by the motion information extraction unit and a second image data stream obtained in the imaging system, and the image data stream generation apparatus may include: a motion information estimation unit that estimates, based on the distributed motion information of the first image data stream, motion information of image data of a frame that is not included in the second image data stream, the image data having the second resolution; and an image data generation unit that generates the image data of the frame that is not included in the second image data stream based on the second image data stream and the motion information estimated by the motion information estimation unit, the image data having the second resolution.

In the above system, only motion information is distributed for one of the two image data streams. This makes it possible to reduce the amount of communication compared with the case of distributing an image data stream itself.

The image data stream generation system according to further another aspect of the present invention is an image data stream generation system for generating a new image data stream from two image data streams with different frame rates and resolutions but with a same field-of-view, the system including: a distribution apparatus that distributes one of the two image data streams and motion information obtained from the other of the image data streams; and an image data stream generation apparatus that generates the new image data stream based on the motion information and the one of the two image data streams distributed from the distribution apparatus, wherein the distribution apparatus may include: an imaging system; a motion information extraction unit that extracts the motion information from a first image data stream obtained in the imaging system; and a distribution unit that distributes the motion information extracted by the motion information extraction unit and a second image data stream obtained in the imaging system, wherein the imaging system may have: a first image data stream generation unit that generates the first image data stream with a first resolution at a first frame rate; and a second image data stream generation unit that generates the second image data stream with a second resolution at a second frame rate, the second resolution being equal to or higher than the first resolution, and the second frame rate being equal to or lower than the first frame rate, wherein a field-of-view of the first image data stream generation unit is same as a field-of-view of the second image data stream generation unit, and the image data stream generation apparatus may include: a motion information estimation unit that estimates, based on the distributed motion information of the first image data stream, motion information of image data of a frame that is not included in the second image data stream, the image data having the second resolution; and an image data generation unit that generates the image data of the frame that is not included in the second image data stream based on the second image data stream and the motion information estimated by the motion information estimation unit, the image data having the second resolution.

According to the above structure, image data of only a user-specified area is distributed. This makes it possible to eventually reduce the amount of communication.

According to the present invention, it is possible to generate a high resolution and high frame rate image data stream without having to use a high resolution and high frame rate camera. Thus, it is possible for the present invention to provide, at a low cost, an imaging system, an image generation apparatus, an image data stream generation apparatus, and an image data stream generation system.

Furthermore, it is also possible for the present invention to provide an image data stream creation apparatus that is capable of performing compression and transfer of moving images in an efficient manner.

Moreover, with the structure of the present invention, the amount of data of image data streams is small even from the stage of image input. Thus, it is possible for the present invention to reduce the amount of communication at the time of data transfer.

Furthermore, with the structure of the present invention, the data amount of input image data streams to be stored is small. Thus, it is possible to show low resolution and high frame rate image data to the user in ordinary cases, and to show high resolution and high frame rate image data only when it is required by the user. This structure makes it possible for the present invention to be used for monitoring and the like.

The disclosure of Japanese Patent Application No. 2004-099050 filed on March 30, 2004 including specification, drawings and claims is incorporated herein by reference in its entirety.

**BRIEF DESCRIPTION OF THE DRAWINGS**

These and other objects, advantages and features of the invention will become apparent from the following description thereof taken in conjunction with the accompanying drawings that illustrate a specific embodiment of the invention. In the Drawings:

FIG. 1 is a functional block diagram showing a structure of an image processing system according to a first embodiment;
FIG. 2 is a diagram showing an internal structure of a multi sensor camera;
FIG. 3 is a diagram for illustrating an overview of processing performed by a high resolution image generation processing unit, where FIG. 3(a) shows image data to be inputted to the high resolution image generation processing unit and FIG. 3(b) shows image data to be outputted from the high resolution image generation processing unit;
FIG. 4 is another diagram showing an overview of processing performed by the high resolution image generation processing unit;
FIG. 5 is a flowchart showing processing performed by the high resolution image generation processing unit;

FIG. 6 is a diagram showing concretely how the above processing is performed by the high resolution image generation processing unit;
FIG. 7 is a diagram showing an overview of a phase correlation method;
FIG. 8 is a flowchart showing processing performed by the high resolution image generation processing unit according to a second embodiment of the present invention;
FIG. 9 is a diagram showing concretely how the above processing is performed by the high resolution image generation processing unit according to the second embodiment;
FIG. 10 is a flowchart showing processing performed by the high resolution image generation processing unit according to a third embodiment of the present invention;
FIG. 11 is a diagram showing concretely how the above processing is performed by the high resolution image generation processing unit according to the third embodiment;
FIG. 12 is a diagram showing how polygon division processing and morphing processing are performed;
FIG. 13 is a diagram showing a structure of a multi sensor camera having a hyperboloidal mirror;
FIG. 14A is a diagram showing a combination of a plane mirror and a hyperboloidal mirror;
FIG. 14B is a diagram showing a combination of an ellipsoidal mirror and a hyperboloidal mirror;
FIG. 14C is a diagram showing a combination of two parabolic mirrors;
FIG. 15 is a functional block diagram showing a structure of an image processing system; and
FIG. 16 is a functional block diagram showing a structure of an image processing system.

**DESCRIPTION OF THE PREFERRED EMBODIMENTS**

(First Embodiment)

The image processing system according to the first embodiment of the present invention is described with reference to the drawings.

<Structure of Image Processing System>

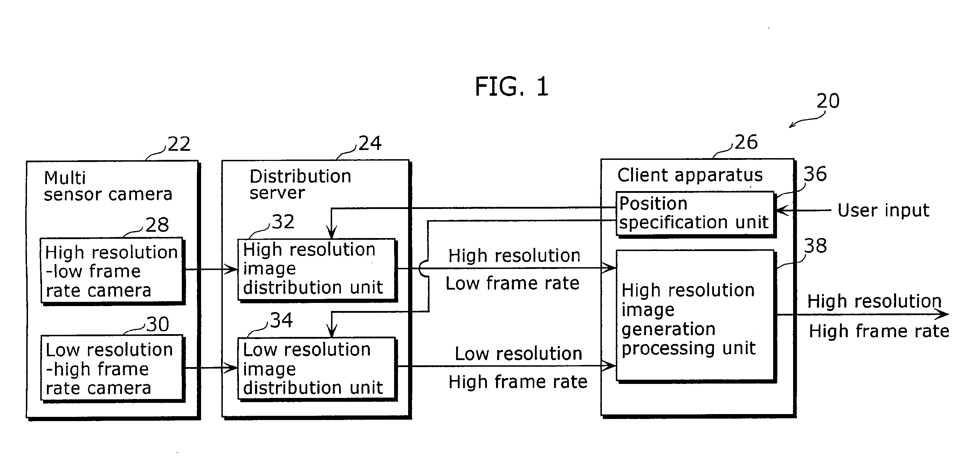

FIG. 1 is a functional block diagram showing a structure of the image processing system according to the first embodiment. An image processing system 20, which is a system for generating a high resolution and high frame rate image data stream, is composed of a multi sensor camera 22, a distribution server 24, and a client apparatus 26.

The multi sensor camera 22, which is a camera for capturing two types of image data streams with the same field-of-view, has a high resolution-low frame rate camera 28 and a low resolution-high frame rate camera 30. The high resolution-low frame rate camera 28 is a sensor that is capable of taking a high resolution (for example, 4000 by 4000 pixels) image data stream at a low frame rate (for example, one frame per second). The low resolution-high frame rate camera 30 is a sensor with the same field-of-view as that of the high resolution-low frame rate camera 28 and is capable of taking a low resolution (for example, NTSC-class resolution of 640 by 480 pixels) image data stream at a high frame rate (30 frames per second). The structure of the multi sensor camera 22 is described in detail later.

The distribution server 24 is an apparatus that distributes two types of image data streams taken by the multi sensor camera 22 over broadcast waves or a computer network such as the Internet. Such distribution server 24 has a high resolution image distribution unit 32 and a low resolution image distribution unit 34.

The high resolution image distribution unit 32 is a processing unit that distributes a high resolution and low frame rate (hereinafter also referred to simply as "high resolution") image data stream obtained by the high resolution-low frame rate camera 28 of the multi sensor camera 22. When receiving, from the client apparatus 26, a specification of a position in the high resolution image data stream, the high resolution image distribution unit 32 extracts, from the high resolution image data stream, a part corresponding to such specification, and distributes it to the client apparatus 26.

The low resolution image distribution unit 34 is a processing unit that distributes a low resolution and high frame rate (hereinafter also referred to simply as "low resolution") image data stream obtained by the low resolution-high frame rate camera 30 of the multi sensor camera 22. When receiving, from the client apparatus 26, a specification of a position in the low resolution image data stream, the low resolution image distribution unit 34 extracts, from the low resolution image data stream, a part corresponding to such specification, and distributes it to the client apparatus 26.

The client apparatus 26 is a processing apparatus that receives two types of image data streams distributed from the distribution server 24 and generates a high resolution and high frame rate image data stream from the two types of image data streams. Such client apparatus 26 has a position specification unit 36 and a high resolution image generation processing unit 38.

The high resolution image generation processing unit 38 is a processing unit that generates a high resolution and high frame rate image data stream, based on the high resolution image data stream and the low resolution image data stream distributed from the distribution server 24. The image data stream outputted by this high resolution image generation processing unit 38 is displayed onto a display unit (not illustrated). Processing performed by the high resolution image generation processing unit 38 is described in detail later.

The position specification unit 36 is a processing unit that accepts a user input for specifying a position to be scaled up in the image data stream displayed on the display unit and sends information about such position to the high resolution image distribution unit 32 and the low resolution image distribution unit 34 of the distribution server 24.

<Structure of Multi Sensor Camera>

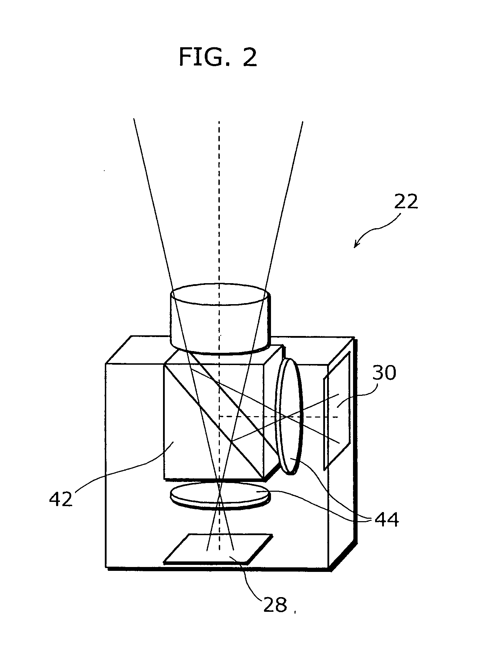

FIG. 2 is a diagram showing an internal structure of the multi sensor camera 22. The multi sensor camera 22, which is a camera for capturing two types of image data streams having the same field-of-view, is made up of a beam splitter 42 such as prism and half-mirror, two lenses 44, a high resolution-low frame rate camera 28, and a low resolution-high frame rate camera 30.

The beam splitter 42 reflects a part of an incident ray. The two lenses 44 gather the ray reflected from the beam splitter 42 and the ray penetrating the beam splitter 42, respectively. The low resolution-high frame rate camera 30 is a sensor that takes an image of the ray gathered by one of the lenses 44 at a low resolution and a high frame rate. The high resolution-low frame rate camera 28 is a sensor that takes an image of the ray gathered by the other of the lenses 44 at a high resolution and a low frame rate.

The use of the multi sensor camera 22 with the above structure makes it possible to take videos having the same field-of-view by the high resolution-low frame rate camera 28 and low resolution-high frame rate camera 30, thereby obtaining both a high resolution image data stream and a low resolution image data stream.

<Processing for Generating High Resolution Image>

Next, a description is given of processing for generating a high resolution and high frame rate image data stream, using the high resolution image data stream and the low resolution image data stream obtained by the multi sensor camera 22 and distributed from the distribution server 24. This processing is performed by the high resolution image generation processing unit 38 of the client apparatus 26 shown in FIG. 1.

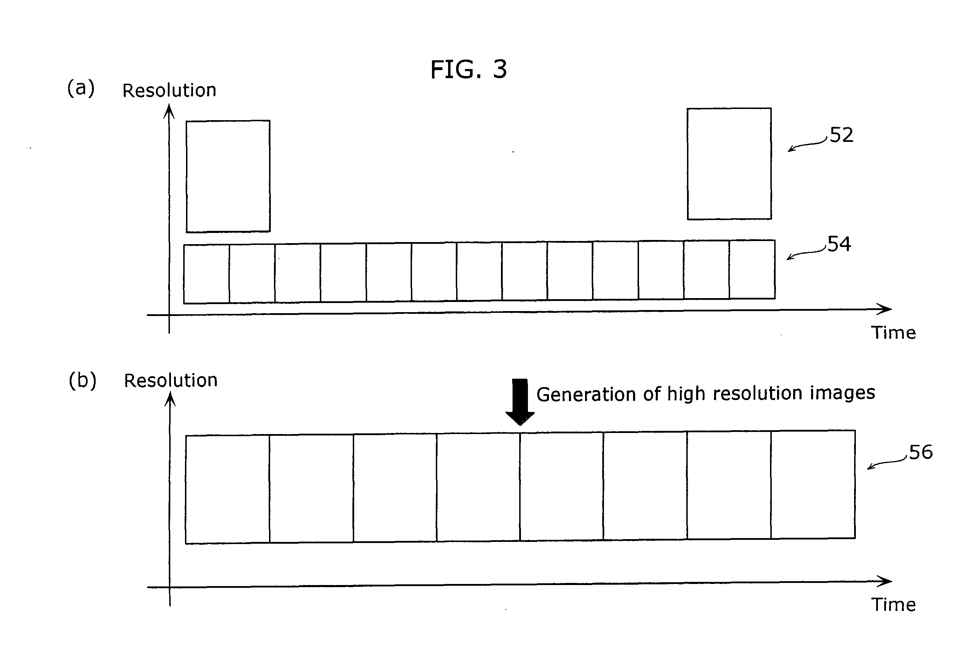

FIG. 3 is a diagram for illustrating an overview of the processing performed by the high resolution image generation processing unit 38. FIG. 3(a) shows image data to be inputted to the high resolution image generation processing unit 38, whereas FIG. 3(b) shows image data to be outputted from the high resolution image generation processing unit 38. As shown in FIG. 3(a), the high resolution image generation processing unit 38 receives, as its inputs, a high resolution and low frame rate image data stream 52 (high resolution image data stream 52) and a low resolution and high frame rate image data stream 54 (low resolution image data stream 54), and generates and outputs a high resolution and high frame rate image data stream 56 as shown in FIG. 3(b), based on the received high resolution image data stream 52 and low resolution image data stream 54.

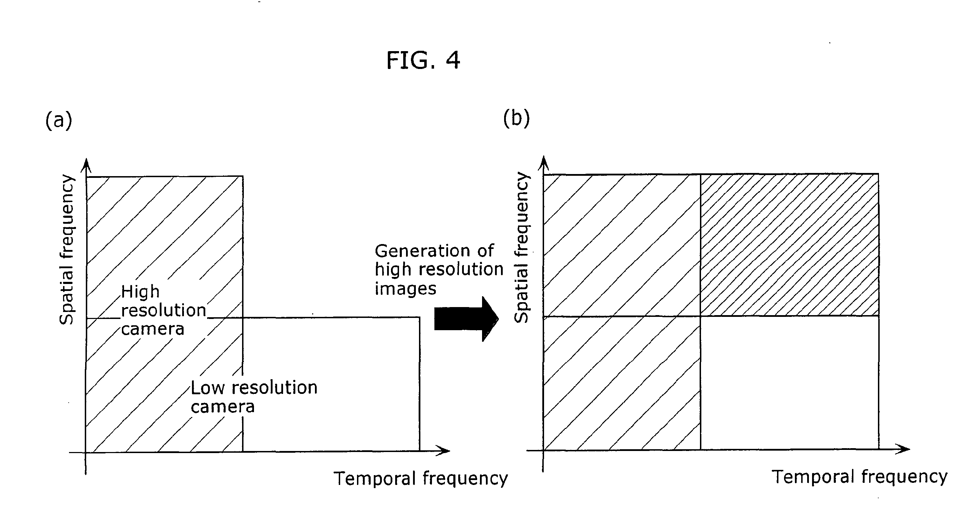

In the present embodiment, the high resolution and high frame rate image data stream 56 is generated, utilizing the frequency characteristics of the respective image data streams. FIG. 4 is another diagram showing an overview of the processing performed by the high resolution image generation processing unit 38. As shown in FIG. 4(a), the high resolution image data stream 52 obtained by a high resolution camera, that is, the high resolution-low frame rate camera 28 is characterized by high spatial frequency and low temporal frequency. On the other hand, the low resolution image data stream 54 obtained by a low resolution camera, that is, the low resolution-high frame rate camera 30 is characterized by low spatial frequency and high temporal frequency. Based on these two types of image data streams 52 and 54, the high resolution image generation processing unit 38 generates image data as shown in FIG. 4(b) whose spatial frequency and temporal frequency are both high. In other words, such resulting image data has the characteristics as those of the high resolution and high frame rate image data 56.

Inside the high resolution image generation processing unit 38, two moving image data obtained by the two sensors 28 and 30, i.e., the high resolution image data stream 52 and the low resolution image data stream 54, are each handled as three-diemenstional (3D) spatial data. The high resolution image data 56 is generated by synthesizing these two image data streams in a 3D space. More specifically, each high resolution image is generated by expanding the spatial and temporal frequency bands through motion vector estimation and motion compensation for the high resolution image, based on the frequency characteristics of the high resolution image data stream 52 and low resolution image data stream 54. To generate a high resolution image by expanding the respective frequency bands means to have effective signal components be included further to the upper right area shown in FIG. 4(b). Since aliasing components and aliasing noise are usually included in such an upper right area, the aliasing components need to be moved toward high frequencies by synthesizing the frequency signal components of the high resolution image and the corresponding low resolution image, so that effective signal components are included further to the upper right area shown in FIG. 4(b).

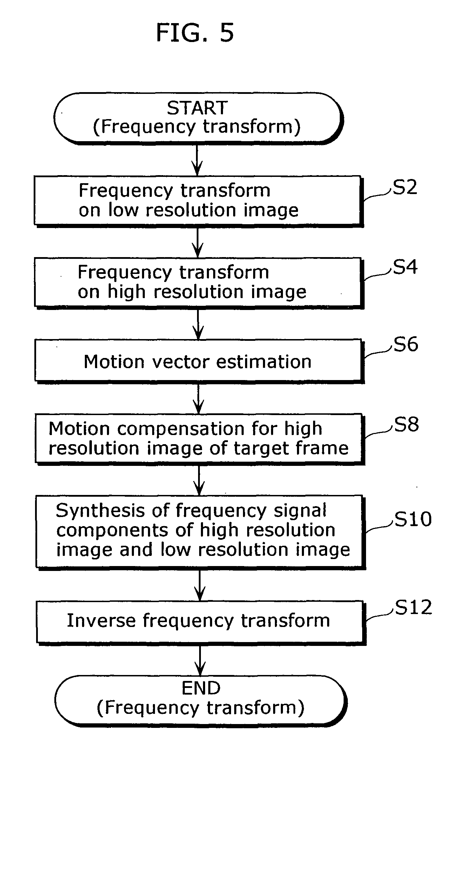

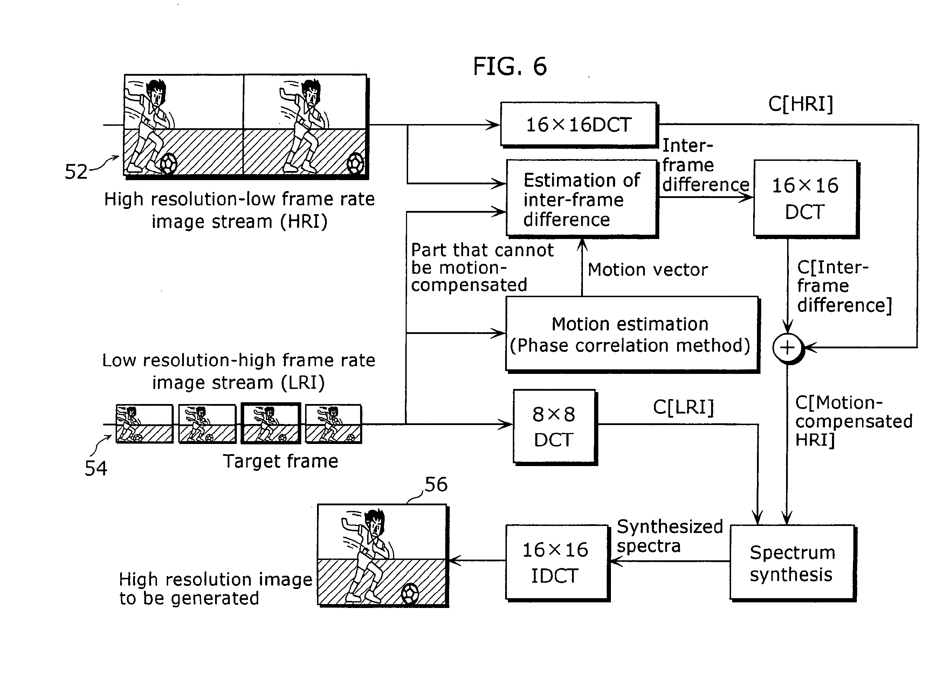

FIG. 5 is a flowchart showing processing performed by the high resolution image generation processing unit 38, and FIG. 6 is a diagram showing concretely how such processing is performed.

First, the high resolution image generation processing unit 38 performs two-dimensional discrete cosine transform (2D-DCT) on the low resolution image data stream 54 so as to extract DCT spectra per frame (S2). 2D-DCT is performed, for example, for each 8 by 8 pixel block. The present embodiment uses, as an example of frequency transform, 2D-DCT which is a kind of orthogonal transform, but another orthogonal transform may be used, such as wavelet transform, Walsh-Hadamard transform (WHT), discrete Fourier transform (DFT), discrete sine transform (DST), Haar transform, slant transform, and Karhunen-Loéve transform (KLT). It should be also noted that the present embodiment is not limited to these orthogonal transforms, and therefore another orthogonal transform may also be used.

Similarly, the high resolution image generation processing unit 38 performs 2D-DCT on the high resolution image data stream 52 so as to extract DCT spectra per frame (S4). For simplification purposes, the following description assumes that the resolution of the high resolution image data stream 52 is two times higher than that of the low resolution image data stream 54. In this case, 2D-DCT is performed for each 16 by 16 pixel block.

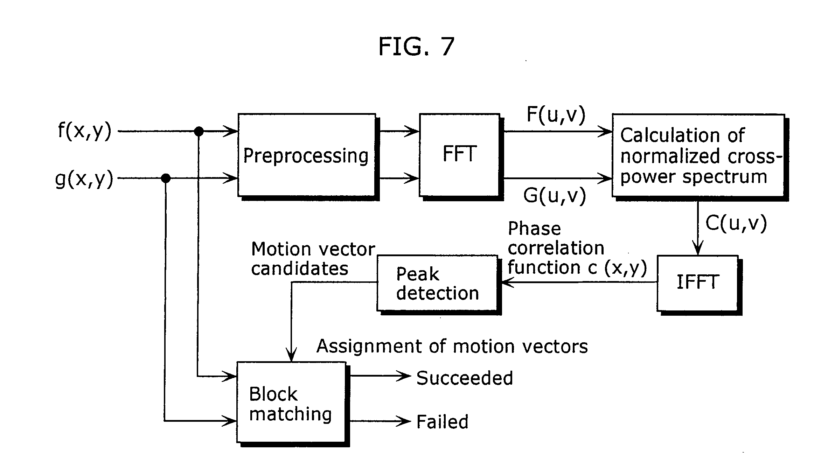

Next, in order to obtain high resolution image data of a frame that is not included in the high resolution image data stream 52 (such frame is illustrated as "target frame" in FIG. 6), the high resolution image generation processing unit 38 performs motion vector estimation based on the low resolution image data stream 54 (S6). Motion vector estimation is performed, using the phase correlation method which is a method for calculating correlation functions by use only of phase components out of amplitude components and phase components obtained by Fourier transform. FIG. 7 is a diagram showing an overview of the phase correlation method. Assume that $f(x, y)$ and $g(x, y)$ denote two successive images included in the low resolution image data stream 54, and that $F(u, v)$ and $G(u, v)$ are results obtained by performing predetermined preprocessing on $f(x, y)$ and $g(x, y)$ and then by performing 2D fast Fourier transform (FFT) on the resultants. Normalized cross-power spectrum $C(u, v)$ is calculated based on the following equation, where $F(u, v)$ and $G(u, v)$ are inputs, and $G^*(u, v)$ denotes a conjugate of $G(u, v)$:

$$C(u, v) = F(u, v)G^*(u, v)/|F(u, v)G^*(u, v)|.$$

A phase correlation function $c(x, y)$ is determined by performing inverse FFT on $C(u, v)$. A peak of phase correlation function $c(x, y)$ occurs at a position that varies depending on the amount of motion included in the input images. Thus, candidate motion vectors are determined by detecting peaks of phase correlation function $c(x, y)$. Then, motion vectors are estimated by performing block matching between blocks included in the two input images, based on the determined motion vector candidates. Refer to Japanese Laid-Open Patent application No. 09-231374 for details about the phase correlation method.

Then, in order to obtain phase components of the high resolution image of the target frame, the high resolution image generation processing unit 38 performs motion compensation for the high resolution image of the target frame, using the DCT spectra of the high resolution image data stream 52 extracted in the frequency transform processing in S4 (S8). More specifically, an inter-frame difference image between the target frame and a high resolution image that is closest to the target frame is estimated, based on the motion vector of the high resolution image data stream 52 determined by the processing in S6, the high resolution image closest to the target frame, and the low resolution image data stream 54. Then, the high resolution image generation processing unit 38 performs DCT on the estimated inter-frame difference image on a 16 by 16 pixel basis so as to determine DCT spectra of such inter-frame difference image. Then, the high resolution image generation processing unit 38 extracts DCT spectra of the motion-compensated high resolution image by synthesizing the DCT spectra of the inter-frame difference image and the DCT spectra, obtained by the frequency transform, of the high resolution image that is closest to the target frame.

Next, the high resolution image generation processing unit 38 synthesizes the DCT spectra of the motion-compensated high resolution image and the DCT spectra of the corresponding low resolution image (S10). More specifically, this is done by determining a weighted linear sum of the DCT spectrum components of the low frequency side of the high resolution image and the DCT spectrum components of the low resolution image. Here, weight is made up of aliasing noise reduction term and energy coefficient correction term.

Finally, the high resolution image generation processing unit 38 generates high resolution image data 56 of the target frame by performing inverse discrete cosine transform (IDCT) on the synthesized DCT spectra on a 16 by 16 pixel block basis.

By performing the above processing on each of all the frames for which high resolution image data has not been obtained, it becomes possible to obtain a high resolution and high frame rate image data stream.

Note that the high resolution and high frame rate image data stream that has been obtained is displayed on the display unit. The user, when wishing to scale up a part in the image data stream displayed on the display unit, specifies an area to be scaled up, using a mouse or the like, for example. The data of the specified area is inputted to the position specification unit 36, from which such data is sent to the high resolution image distribution unit 32 and the low resolution image distribution unit 34. The high resolution image distribution unit 32 and the low resolution image distribution unit 34 send, to the high resolution image generation processing unit 38, the high resolution image data and the low resolution image data corresponding to the specified area. In response to this, the high resolution image generation processing unit 38 generates high resolution and high frame rate image data of the specified area, using the above-described method, and the generated image data is then displayed on the display unit.

As described above, according to the present embodiment, the size of the two types of image data streams outputted from the multi sensor camera 22 is already small. Thus, it becomes possible to reduce the amount of data to be transmitted at the time of data transfer as well as the amount of data to be stored at the time of data storage. Furthermore, since there is no need for data compression as is required for MPEG, the present invention is effective for real-time video distribution and the like. As described above, the use of a combination of two types of sensors with different temporal and spatial characteristics makes it possible to separately obtain moving image information whose spatial resolution should be prioritized and moving image information whose temporal resolution should be prioritized, thereby obtaining high resolution moving image information in an efficient manner.

Furthermore, the high resolution image generation processing unit 38 generates high resolution image data by transforming input image data into the frequency domain and then by performing typical processes on the resultant. This allows for easy hardware implementation as well as high-speed processing.

What is more, the frame rate of the high resolution image data stream outputted from the high resolution image distribution unit 32 is low and the resolution of the low resolution image data stream outputted from the low resolution image distribution unit 34 is low. This makes it possible to reduce the amount of data transmitted between the distribution server 24 and the client apparatus 26, as a result of which video distribution, real-time distribution and the like becomes possible using low-speed communication lines.

(Second Embodiment)

Next, a description is given of an image processing system according to the second embodiment of the present invention. The image processing system according to the second embodiment is the same as that of the first embodiment except for that internal processing performed by the high resolution image generation processing unit 38 of the client apparatus 26 is different. Thus, the following describes only processing performed by the high resolution image generation processing unit 38 for generating a high resolution image. In the present embodiment, Affine transform (homography) is used to generate a high resolution image.

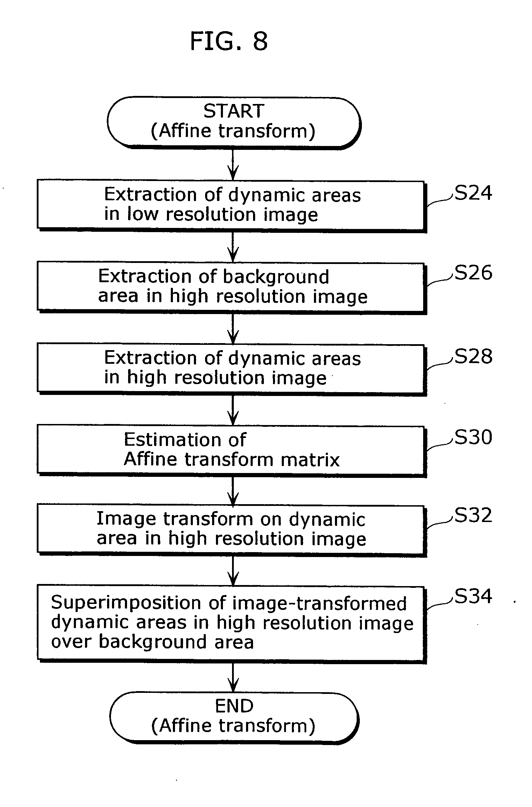

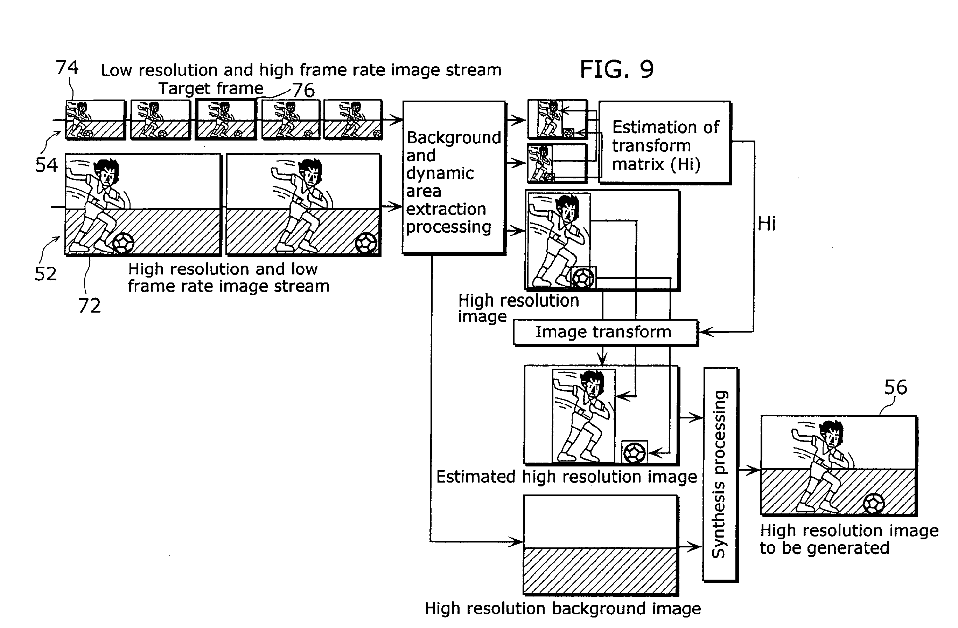

FIG. 8 is a flowchart showing processing performed by the high resolution image generation processing unit 38, and FIG. 9 is a diagram showing concretely how such processing is performed.

First, the high resolution image generation processing unit 38 extracts dynamic areas from the low resolution image data stream 54 (S24), and extracts a background area from the high resolution image data stream 52 (S26). Furthermore, the high resolution image generation processing unit 38 extracts dynamic areas from the high resolution image data stream 52 (S28). A variety of methods are proposed for extracting dynamic areas and a background area from moving image data, of which a method that uses an inter-frame difference value of image data is known as a typical method. Since these methods are known techniques, details thereof are not repeated here.

Next, in order to obtain high resolution image data of a frame that is not included in the high resolution image data stream 52 (such frame is illustrated as "target frame" in FIG. 9), the high resolution image generation processing unit 38 estimates an Affine transform matrix (homography) based on the dynamic areas extracted from the low resolution image data stream 54 (S30). Affine transform matrix, which is a matrix representing a geometric image transform, allows for the representation of geometric changes (motion) in the dynamic areas.

For example, as shown in FIG. 9, an association is established between (i) each dynamic area in the frame 74 included in the low resolution image data stream 54 that is the same as the frame 72 included in the high resolution image data stream 52 and (ii) each dynamic area in the target frame 76 included in the low resolution image data stream 54, and Affine transform matrices Hi are determined. Such association is established by performing pattern matching for each of blocks with a predetermined size. An Affine transform matrix Hi is also determined on a block-by-block basis. Affine transform matrix Hi makes it possible to represent translation, rotation, extension and contraction, distortion, and the like between blocks. Note that pattern matching is performed by determining a position in a block at which the sum of absolute differences representing brightness of the pixels included in such block becomes the smallest. Since pattern matching is a known technique, a detailed description thereof is not repeated here.

Next, the high resolution image generation processing unit 38 performs image transform on the dynamic areas in the frame 72 included in the high resolution image data stream 52 so as to transform them into high resolution dynamic areas, by performing an operation that utilizes the Affine transform matrices Hi (S32). Then, by superimposing the transformed dynamic areas onto the background area of the high resolution image data stream 52, the high resolution image generation processing unit 38 generates the high resolution image data 56 (S34).

By performing the above processing on each of all the frames whose high resolution image data has not been obtained, it becomes possible to obtain a high resolution and high frame rate image stream.

As described above, according to the present embodiment, it becomes possible to perform motion estimation for dynamic areas in an easy and stable manner by determining an Affine transform matrix Hi.

Note that in the case where an object is a nonrigid object such as a person, it is possible to obtain a high resolution image of its motion by dividing it into sub-blocks that can be approximated as a rigid body, determining an Affine transform matrix Hi for each of such sub-blocks, and then applying the method of the present invention.

(Third Embodiment)

Next, a description is given of an image processing system according to the third embodiment of the present invention. The image processing system according to the third embodiment is the same as that of the first embodiment except for that internal processing performed by the high resolution image generation processing unit 38 of the client apparatus 26 is different. Thus, the following describes only processing performed by the high resolution image generation processing unit 38 for generating a high resolution image. In the present embodiment, morphing is used to generate a high resolution image.

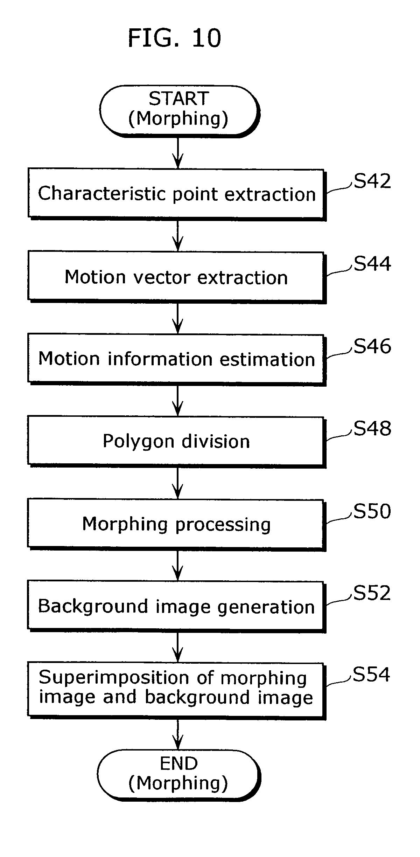

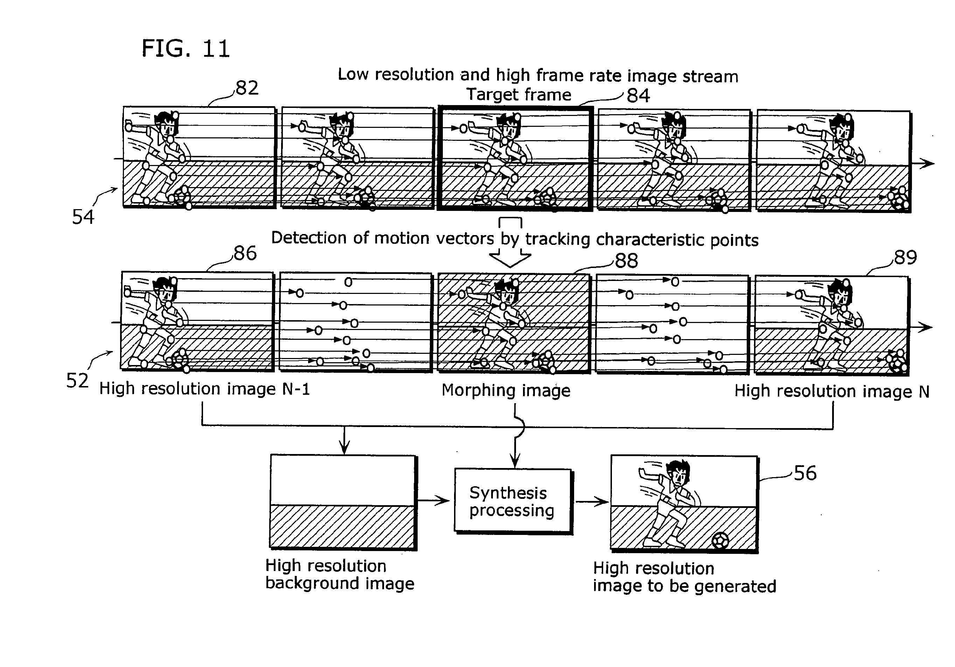

FIG. 10 is a flowchart showing processing performed by the high resolution image generation processing unit 38, and FIG. 11 is a diagram showing concretely how such processing is performed.

First, the high resolution image generation processing unit 38 extracts characteristic points from a frame 82, included in the low resolution image data stream 54, corresponding to a frame 86 included in the high resolution image data stream 52 (S42). This is done by, for example, scanning a predetermined size block in each of the frames included in the low resolution image data stream 54, and then by extracting, as characteristic points, points that are easy to track, such as ones at the corners and edges of the image corresponding to such block. A variety of methods are proposed for extracting characteristic points. Since these methods are known techniques, details thereof are not repeated here.

Then, the high resolution image generation processing unit 38 associates the extracted characteristic points between the frames of the low resolution image data stream 54 so as to track the characteristic points and extracts the motion vector of each of the characteristic points (S44). The tracking of characteristic points is performed by searching the corresponding area in the previous frame for characteristic points that are similar to the current characteristic points. It is possible to improve the stability of tracking by limiting the search area according to the motion history of the current characteristic point as well as its motion from a neighboring characteristic point. As a result of the tracking, it becomes possible to determine the motion vector of an arbitrary characteristic point.

Next, in order to obtain high resolution image data of a frame 88 that corresponds to a frame not included in the high resolution image data stream 52 (such frame is illustrated as "target frame 84" in FIG. 11), the high resolution image generation processing unit 38 estimates the motion of each characteristic point in the frame 86 included in the high resolution image data stream 52 (S46). The low resolution image data stream 54 and the high resolution image data stream 52, which have the same field-of-view, are different only in their resolutions, meaning that the positions of the characteristic points in their respective frames are relatively the same. Thus, it is possible to estimate the motion of the characteristic points in the high resolution image data stream 52 by adaptively applying the characteristic points and motion vectors that have been determined for the low resolution image data stream 54 in accordance with the resolution of the high resolution image data stream 52.

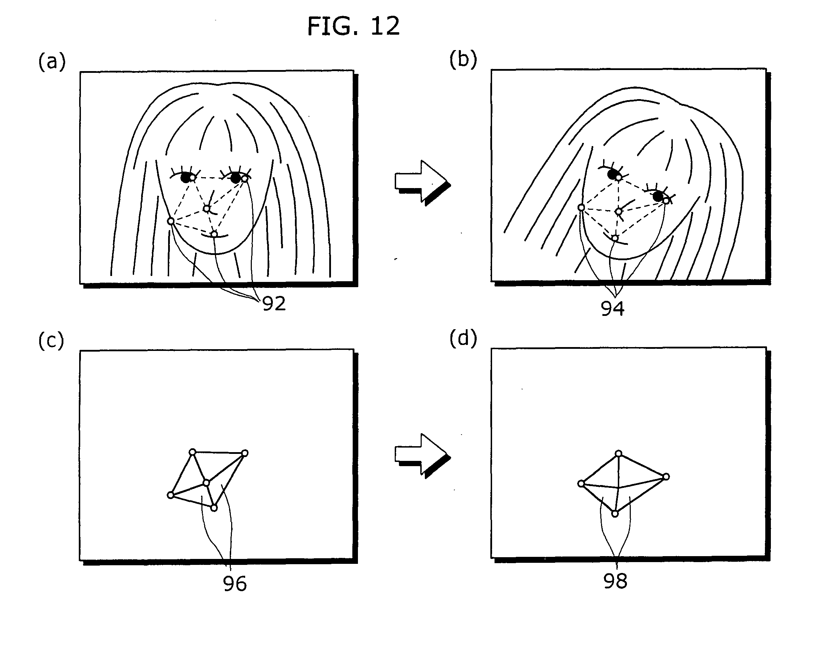

Next, the high resolution image generation processing unit 38 performs polygon division on the high resolution frames 86 and 89 that are neighboring frames of the target frame 88 to be interpolated, based on their corresponding characteristic points (S48). Here, Delaunay division, for example, may be used as Polygon division. Then, the high resolution image generation processing unit 38 a ssociates an arbitrary polygon in the high resolution frame 86 with an arbitrary polygon in the high resolution frame 89 based on motion vectors obtained by the tracking, so as to perform morphing processing. Through this morphing processing, an arbitrary polygon in the target frame 88 is generated and a polygon image is generated accordingly (S50). FIG. 12 is a diagram showing how polygon division processing and morphing processing are performed. Characteristic points 92 as shown in FIG. 12(a) are selected from low resolution image data as characteristic points corresponding to an area whose dispersion in brightness is large (e.g. an area including eyes, mouth, and the like), and then characteristic points 94 corresponding to the characteristic points 92 as shown in FIG. 12(b) are determined. By connecting the characteristic points 92 and the characteristic points 94 respectively by lines, triangle polygons 96 and 98 as shown in FIG. 12(c) and FIG. 12(d) are generated. Correspondence between each polygon is known from the motion vector of each characteristic point. Thus, it is possible to obtain dynamic areas as shown in the frame 88 by adaptively modifying the texture information of each of the already obtained polygons in the respective frames 86 and 89 so that it suits the corresponding polygon, and then by mapping the modified texture information over such polygon.

Next, the high resolution image generation processing unit 38 generates a background image from the high resolution image data stream 52 (S52). A method for generating a background image is a known technique as mentioned above.

Then, by superimposing the dynamic areas obtained by the morphing processing over the background image, it becomes possible to generate the high resolution image data 56 (S54).

By performing the above processing on each of all the frames whose high resolution image data has not been obtained, it becomes possible to obtain a high resolution and high frame rate image data stream.

As described above, according to the present embodiment, it becomes easier to track changes in dynamic areas through polygon division processing and morphing processing than in the case of processing presented in the first and second embodiments.

Note that it is more preferable to extract, prior to the characteristic point extraction processing (S42), a dynamic area by determining an inter-frame difference based on the low resolution image data stream 54 and then to create a mask image made up of the dynamic area and a static area that are represented as binary images. The use of a mask image created in the above manner makes it possible to reduce the cost required for calculation, since the extraction of characteristic points and the subsequent processing such as motion vector extraction are required to be performed only within the dynamic area.

In the present embodiment, characteristic points are associated with each other between frames based on the low resolution image data stream 54 that has been sampled at a high frame rate. This makes it possible to correctly establish an association of characteristic points, even in the case of an object such as non-rigid object whose dynamic area changes in shape, by establishing an association between the neighboring frames.

The image processing system according to the present invention has been described so far based on the aforementioned embodiments, but the present invention is not limited to these embodiments.

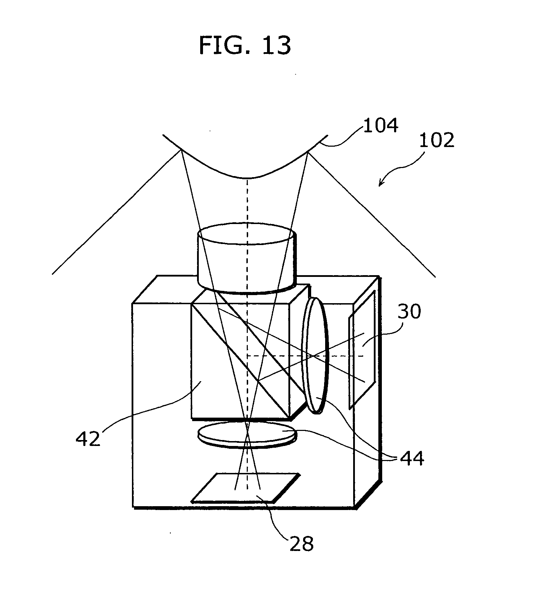

For example, instead of the multi sensor camera 22, it is possible to use a multi sensor camera 102 that includes a hyperboloidal mirror as shown in FIG. 13. A hyperboloidal mirror 104 can reflect rays from the full 360-degree field of view. The use of the hyperboloidal mirror 104 makes it possible to obtain a seamless image corresponding to the 360-degree field of view. In the case of using the multi sensor camera 102, the high resolution image generation processing unit 38 may generate a high resolution panoramic image or a perspective projective transform image (an image to be taken by an ordinary camera). Refer to Japanese Laid-Open Patent application No. 06-295333 filed by the Applicants of the present invention for details about the methods for generating panoramic image and generating perspective projective transform image using the hyperboloidal mirror 104.

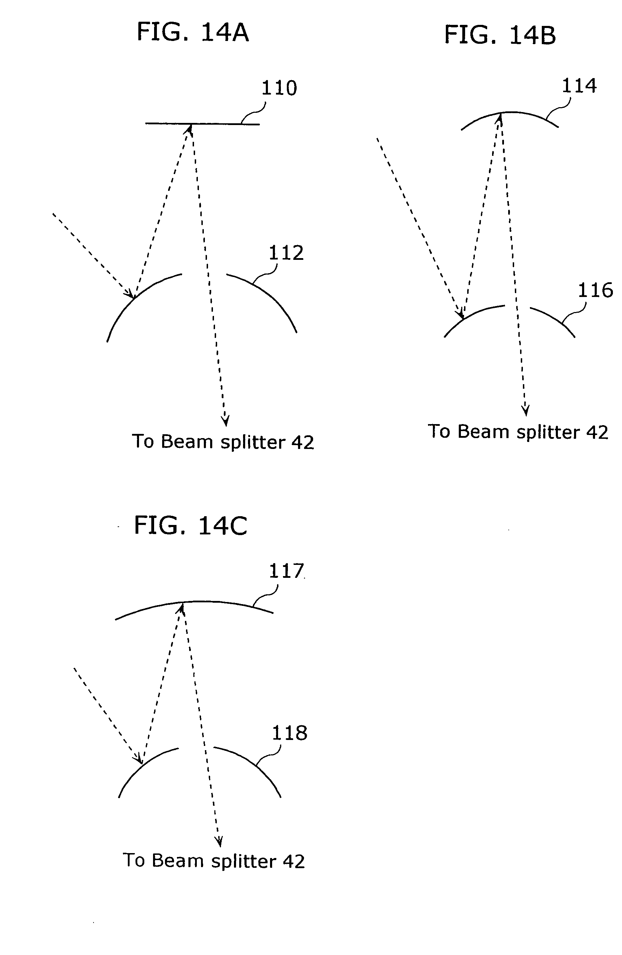

Also note that the number of mirrors is not limited to one, and thus two or more mirrors may be used. For example, the following are also applicable to the present invention: a combination of a plane mirror 110 and a hyperboloidal mirror 112 as shown in FIG. 14A; a combination of an ellipsoidal mirror 114 and a hyperboloidal mirror 116 as shown in FIG. 14B; and a combination of parabolic mirrors 117 and 118 as shown in FIG. 14C. Refer to Japanese Laid-Open Patent application No. 11-331654 filed by the Applicants of the present invention for details about the omnidirectional vision system using two mirrors.

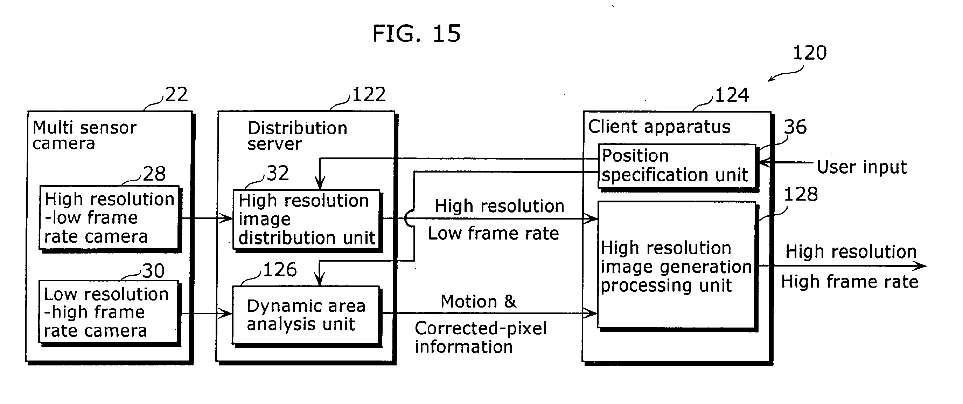

Also, the distribution server 24 has been described to distribute a high resolution image data stream and a low resolution image data stream in the image processing system 20 shown in FIG. 1, but the present invention is also applicable to an image processing system 120 as shown in FIG. 15. Such image processing system 120 is composed of a distribution server 122 and a client apparatus 124. The distribution server 122 has a high resolution image distribution unit 32 and a dynamic area analysis unit 126. The dynamic area analysis unit 126 analyzes a dynamic area included in a low resolution image data stream, and distributes its motion information to the client apparatus 124. More specifically, the dynamic area analysis unit 126 obtains and distributes the following: phase components of the low resolution image data stream; Affine transform matrix obtained from the low resolution image data stream; characteristic points and motion vectors obtained from the low resolution image data stream. Meanwhile, the high resolution image generation processing unit 128 of the client apparatus 124 generates a high resolution and high frame rate image data stream based on the high resolution image data stream and motion information of the low resolution image data stream distributed from the distribution server 122. With this structure, it becomes possible to reduce the amount of data transmitted between the distribution server 122 and the client apparatus 124 compared with the case where a low resolution image data stream needs to be distributed.

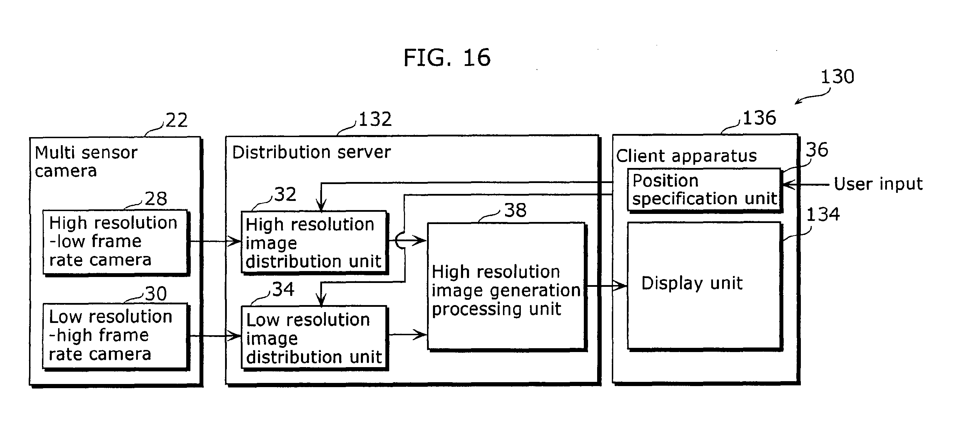

Furthermore, it is also possible, as shown in FIG. 16, to integrate the high resolution image generation processing unit 38 into a distribution server 132, thereby distributing a high resolution and high frame rate image data stream to the client apparatus 136. In this case, it becomes possible to reduce the amount of data to be transmitted, by distributing only image data included in a user-specified area to the client apparatus.

Moreover, it is also possible to incorporate, into the image processing system 20 or the image processing system 120, a device or a storage unit for storing images taken by the multi sensor camera 22.

Furthermore, it is also possible to apply the method described in the above embodiments to image compression and image decompression. More specifically, image compression is performed by creating, from a high resolution and high frame rate image data stream, two types of image data streams, that is, (1) a low resolution and high frame rate image data stream that is obtained by lowering only the resolution of the high resolution and high frame rate image data stream and (2) a high resolution and low frame rate image data stream that is obtained by thinning out some of image data from the high resolution and high frame rate image data stream. Meanwhile, the compressed images are decompressed into the high resolution and high frame rate image data stream according to the above-described processing performed by the high resolution image generation processing unit 38.

Moreover, it is also possible to display either low resolution and high frame rate images or high resolution and low frame rate images in ordinary cases, and high resolution and low frame rate images are displayed only upon a user request.

Although only some exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention.

**INDUSTRIAL APPLICABILITY**

The present invention is applicable to image processing such as generation, compression, and transfer of image data, and particularly to remote monitoring, security system, remote meeting, remote medical care, remote education, and interactive broadcasting such as of concert and sports.

**Claims**

1. An imaging system, comprising:

   a first image data stream generation unit operable to generate a first image data stream with a first resolution at a first frame rate; and
   a second image data stream generation unit operable to generate a second image data stream with a second resolution at a second frame rate, the second resolution being equal to or higher than the first resolution, and the second frame rate being equal to or lower than the first frame rate,

   wherein a field-of-view of said first image data stream generation unit is same as a field-of-view of said second image data stream generation unit.

2. The imaging system according to Claim 1, further comprising
   an incident ray separation unit operable to separate an incident ray into two incident rays,
   wherein said first image data stream generation unit is operable to generate the first image data stream from one of the incident rays separated by said incident ray separation unit, and
   said second image data stream generation unit is operable to generate the second image data stream from the other of the incident rays separated by said incident ray separation unit.

3. The imaging system according to Claim 1, further comprising

an omnidirectional visual sensor that gathers omnidirectional incident rays,

wherein said first image data stream generation unit and said second image data stream generation unit generate the first image data stream and the second image data stream, respectively, from the incident rays gathered by said omnidirectional visual sensor.

4. The imaging system according to Claim 3,

wherein said omnidirectional visual sensor includes mirrors, each of which has a shape that allows the omnidirectional incident rays to be gathered.

5. The imaging system according to Claim 1, further comprising

a distribution unit operable to distribute the first image data stream and the second image data stream to outside.

6. The imaging system according to Claim 1, further comprising

a storage unit operable to store the first image data stream and the second image data stream.

7. An image data stream creation apparatus that creates, from a predetermined image data stream, two image data streams with different frame rates or resolutions, said apparatus comprising:

a first image data stream creation unit operable to create, from the predetermined image data stream, a first image data stream with a first resolution at a first frame rate; and
a second image data stream creation unit operable to create, from the predetermined image data stream, a second image data stream with a second resolution at a second frame rate, the second resolution being equal to or higher than the first resolution, and the second frame rate being equal to or lower than the first frame rate.

8. The image data stream creation apparatus according to Claim 7,

wherein the first resolution and the second frame rate are same as a resolution and a frame rate of the predetermined image data stream, respectively.

9. The image data stream creation apparatus according to Claim 7,

a distribution unit operable to distribute the first image data stream and the second image data stream to outside.

10. The image data stream creation apparatus according to Claim 7,

a storage unit operable to store the first image data stream and the second image data stream.

11. An image generation apparatus that generates a new image data stream from two image data streams with different frame rates and resolutions but with a same field-of-view, said apparatus comprising:

a motion information extraction unit operable to extract motion information from a first image data stream with a first frame rate and a first resolution;
a motion information estimation unit operable to estimate, based on the extracted motion information of the first image data stream, motion information of image data of a frame that is not included in a second image data stream with a second frame rate and a second resolution, the second frame rate being equal to or lower than the first frame rate, the second resolution being equal to or higher than the first resolution, and the image data having the second resolution; and
an image data generation unit operable to generate the image data of the frame that is not included in the second image data stream based on the second image data stream and the motion information estimated by said motion information estimation unit, the image data having the second resolution.

12. The image generation apparatus according to Claim 11,

wherein said motion information extraction unit is operable to extract the motion information from the first image data stream using a phase correlation method,

said motion information estimation unit includes:

a high resolution frequency component extraction unit operable to extract a frequency signal component of the second image data stream by performing frequency transform on the second image data stream;
a difference image generation unit operable to generate a difference image based on the motion information of the first image data stream, the first image data stream, and the second image data stream, the difference image being a difference between the image data of the frame that is not included in the second image data stream and image data of a frame that is included in the second image data stream;

a difference image frequency component extraction unit operable to extract a frequency signal component of the difference image by performing the frequency transform on the difference image; and

a motion compensation unit operable to perform motion compensation for the image data of the frame that is not included in the second image data stream by determining a frequency signal component of the image data of the frame that is not included in the second image data stream based on the frequency signal component of the second image data stream and the frequency signal component of the difference image, the image data having the second resolution, and

said image data generation unit includes:

a low resolution frequency component extraction unit operable to extract a frequency signal component of the first image data stream by performing the frequency transform on the first image data stream;

a synthesis unit operable to synthesize the frequency signal component of the motion-compensated image data with the second resolution and the frequency signal component of the first image data stream; and

an inverse frequency transform unit operable to perform inverse transform of the frequency transform on a frequency signal component obtained by the synthesis performed by said synthesis unit.

13. The image generation apparatus according to Claim 12,

wherein the frequency transform is orthogonal transform.

14. The image generation apparatus according to Claim 13,

wherein the orthogonal transform is discrete cosine transform.

15. The image generation apparatus according to Claim 13,

wherein the orthogonal transform is wavelet transform.

16. The image generation apparatus according to Claim 12,

wherein said motion information extraction unit is operable to extract the motion information from the first image data stream, using the phase correlation method that utilizes fast Fourier transform.

17. The image generation apparatus according to Claim 11,

wherein said motion information extraction unit includes:

a first dynamic area extraction unit operable to extract dynamic areas from the first image data stream;

a second dynamic area extraction unit operable to extract a dynamic area and a background area from the second image data stream; and

a transform matrix estimation unit operable to estimate an Affine transform matrix for the dynamic areas of the first image data stream based on the extracted dynamic areas of the first image data stream,

said motion information estimation unit is operable to perform an operation using the Affine transform matrix on the dynamic area of the second image data stream, and to generate a dynamic area in the frame that is not included in the second image data stream, and

said image data generation unit is operable to superimpose the dynamic area estimated by said motion information estimation unit onto the background area extracted from the second image data stream by said second dynamic area extraction unit.

18. The image generation apparatus according to Claim 11,

wherein said motion information extraction unit includes:

a characteristic point extraction unit operable to extract characteristic points from image data of each of frames included in the first image data stream; and

a motion vector extraction unit operable to associate the characteristic points between the frames, and to extract motion vectors,

said motion information estimation unit is operable to interpolate motion vectors of the frame that is not included in the second image data stream, based on the motion vectors extracted by said motion vector extraction unit, and

said image data generation unit includes:

a polygon division unit operable to apply the characteristic points extracted by said characteristic point extraction unit to the second image data stream, and to obtain each area formed by connecting the characteristic points as a polygon area;

a dynamic area generation unit operable to perform morphing on the polygon area obtained by said polygon division unit based on the motion vectors estimated by said motion information estimation unit, and to generate a dynamic area of the frame that is not included in the second image data stream;

a background area extraction unit operable to extract a background area from the second image data stream; and

a superimposition unit operable to superimpose the dynamic area generated by said dynamic area generation unit onto the background area extracted by said background area extraction unit.

19. The image generation apparatus according to Claim 11,

wherein the first image data stream and the second image data stream are generated in an imaging system, and

the imaging system includes:

a first image data stream generation unit operable to generate a first image data stream with a first resolution at a first frame rate; and

a second image data stream generation unit operable to generate a second image data stream with a second resolution at a second frame rate, the second resolution being equal to or higher than the first resolution, and the second frame rate being equal to or lower than the first frame rate,

wherein a field-of-view of said first image data stream generation unit is same as a field-of-view of said second image data stream generation unit.

20. The image generation apparatus according to Claim 11,

wherein the first image data stream and the second image data stream are generated by an image data creation apparatus that creates, from a predetermined image data stream, two image data streams with different frame rates or resolutions, the image data creation apparatus including:

a first image data stream creation unit operable to create, from the predetermined image data stream, the first image data stream with the first resolution at the first frame rate; and

a second image data stream creation unit operable to create, from the predetermined image data stream, the second image data stream with the second resolution at the second frame rate, the second resolution being equal to or higher than the first resolution, and the second frame rate being equal to or lower than the first frame rate.

21. An image data stream generation system for generating a new image data stream from two image data streams with different frame rates and resolutions but with a same field-of-view, said system comprising:

an image data stream distribution apparatus that distributes the two image data streams; and

an image data stream generation apparatus that generates the new image data stream from the two image data streams with different frame rates and resolutions but with the same field-of-view, said image data stream generation apparatus being connected to said image data stream distribution apparatus,

wherein said image data stream distribution apparatus includes:

a first image data stream generation unit operable to generate a first image data stream with a first resolution at a first frame rate;

a second image data stream generation unit operable to generate a second image data stream with a second resolution at a second frame rate, the second resolution being equal to or higher than the first resolution, and the second frame rate being equal to or lower than the first frame rate; and

a distribution unit operable to distribute the first image data stream and the second image data stream to outside,

wherein a field-of-view of said first image data stream generation unit is same as a field-of-view of said second image data stream generation unit, and

said image data stream generation apparatus includes:

a motion information extraction unit operable to extract motion information from the first image data stream with the first frame rate and the first resolution;

a motion information estimation unit operable to estimate, based on the extracted motion information of the first image data stream, motion information of image data of a frame that is not included in the second image data stream with the second frame rate and the second resolution, the second frame rate being equal to or lower than the first frame rate, the second resolution being equal to or higher than the first resolution, and the image data having the second resolution; and

an image data generation unit operable to generate the image data of the frame that is not included in the second image data stream based on the second image data stream and the motion information estimated by said motion information estimation unit, the image data having the second resolution.

22. The image data stream generation system according to Claim 21,
wherein said image data stream generation apparatus further includes
a frame transmission unit operable to accept a user specification of a frame, and to transmit, to said image data stream distribution apparatus, frame information related to the frame specified by the user, and
said image data stream distribution apparatus further includes
a frame receiving unit operable to receive the frame information,
wherein said distribution unit is operable to distribute the first image data stream and the second image data stream that are required for generating image data of the frame specified in the frame information.

23. An image data stream generation system for generating a new image data stream from two image data streams with different frame rates and resolutions but with a same field-of-view, said system comprising:

a distribution apparatus that distributes one of the two image data streams and motion information obtained from the other of the image data streams; and
an image data stream generation apparatus that generates the new image data stream based on the motion information and the one of the two image data streams distributed from said distribution apparatus,

wherein said distribution apparatus includes:

an imaging system;
a motion information extraction unit operable to extract the motion information from a first image data stream obtained in said imaging system; and
a distribution unit operable to distribute the motion information extracted by said motion information extraction unit and a second image data stream obtained in said imaging system,

wherein said imaging system has:

a first image data stream generation unit operable to generate the first image data stream with a first resolution at a first frame rate; and
a second image data stream generation unit operable to generate the second image data stream with a second resolution at a second frame rate, the second resolution being equal to or higher than the first resolution, and the second frame rate being equal to or lower than the first frame rate,

wherein a field-of-view of said first image data stream generation unit is same as a field-of-view of said second image data stream generation unit, and
said image data stream generation apparatus includes:

a motion information estimation unit operable to estimate, based on the distributed motion information of the first image data stream, motion information of image data of a frame that is not included in the second image data stream, the image data having the second resolution; and
an image data generation unit operable to generate the image data of the frame that is not included in the second image data stream based on the second image data stream and the motion information estimated by said motion information estimation unit, the image data having the second resolution.

24. The image data stream generation system according to Claim 23,
wherein said motion information extraction unit is operable to extract the motion information from the first image data stream using a phase correlation method,
said motion information estimation unit has:

a high resolution frequency component extraction unit operable to extract a frequency signal component of the second image data stream by performing frequency transform on the second image data stream;
a difference image generation unit operable to generate a difference image based on the motion information of the first image data stream, the first image data stream, and the second image data stream, the difference image being a difference between the image data of the frame that is not included in the second image data stream and image data of a frame that is included in the second image data stream;
a difference image frequency component extraction unit operable to extract a frequency signal component of the difference image by performing the frequency transform on the difference image; and
a motion compensation unit operable to perform motion compensation for the image data of the frame that is not included in the second image data stream by determining a frequency signal component of the image data of the frame that is not included in the second image data stream based on the frequency signal component of the second image data stream and the frequency signal component of the difference image, the image data having the second resolution, and
said image data generation unit has:

a low resolution frequency component extraction unit operable to extract a frequency signal component of the first image data stream by performing the frequency transform on the first image data stream;
a synthesis unit operable to synthesize the frequency signal component of the motion-compensated image data with the second resolution and the frequency signal component of the first image data stream; and
an inverse frequency transform unit operable to perform inverse transform of the frequency transform on a frequency signal component obtained by the synthesis performed by said synthesis unit.

25. The image data stream generation system according to Claim 24,
wherein the frequency transform is orthogonal transform.

26. The image data stream generation system according to Claim 25,
wherein the orthogonal transform is discrete cosine transform.

27. The image data stream generation system according to Claim 25,
wherein the orthogonal transform is wavelet transform.

28. The image data stream generation system according to Claim 24,
wherein said motion information extraction unit is operable to extract the motion information from the first image data stream, using the phase correlation method that utilizes fast Fourier transform.

29. The image data stream generation system according to Claim 23,
wherein said motion information extraction unit has:

a first dynamic area extraction unit operable to extract dynamic areas from the first image data stream;
a second dynamic area extraction unit operable to extract a dynamic area and a background area from the second image data stream; and

a transform matrix estimation unit operable to estimate an Affine transform matrix for the dynamic areas of the first image data stream based on the extracted dynamic areas of the first image data stream,
said motion information estimation unit is operable to perform an operation using the Affine transform matrix on the dynamic area of the second image data stream, and to generate a dynamic area in the frame that is not included in the second image data stream, and
said image data generation unit is operable to superimpose the dynamic area estimated by said motion information estimation unit onto the background area extracted from the second image data stream by said second dynamic area extraction unit.

30. The image data stream generation system according to Claim 23,
wherein said motion information extraction unit has:

a characteristic point extraction unit operable to extract characteristic points from image data of each of frames included in the first image data stream; and
a motion vector extraction unit operable to associate the characteristic points between the frames, and to extract motion vectors,
said motion information estimation unit is operable to interpolate motion vectors of the frame that is not included in the second image data stream, based on the motion vectors extracted by said motion vector extraction unit, and
said image data generation unit has:

a polygon division unit operable to apply the characteristic points extracted by said characteristic point extraction unit to the second image data stream, and to obtain each area formed by connecting the characteristic points as a polygon area;
a dynamic area generation unit operable to perform morphing on the polygon area obtained by said polygon division unit based on the motion vectors estimated by said motion information estimation unit, and to generate a dynamic area of the frame that is not included in the second image data stream;
a background area extraction unit operable to extract a background area from the second image data stream; and
a superimposition unit operable to superimpose the dynamic area generated by said dynamic area generation unit onto the background area extracted by said background area extraction unit.

**31.** The image data stream generation system according to Claim 23,

wherein said image data stream generation apparatus further includes

a frame transmission unit operable to accept a user specification of a frame, and to transmit, to said image data stream distribution apparatus, frame information related to the frame specified by the user, and

said image data stream distribution apparatus further includes

a frame receiving unit operable to receive the frame information,

wherein said distribution unit is operable to distribute the motion information and the second image data stream that are required for generating image data of the frame specified in the frame information, the motion information extracted by said motion information extraction unit, and the second image data stream generated in said imaging system.

**32.** An image data stream generation system for generating a new image data stream from two image data streams with different frame rates and resolutions but with a same field-of-view, said system comprising:

an image data stream distribution apparatus that distributes an image data stream; and
an image data stream receiving apparatus that receives the image data stream distributed from said image data stream distribution apparatus,

wherein said image data stream distribution apparatus includes:

a first distribution unit operable to distribute a first image data stream with a first frame rate and a first resolution;
an area receiving unit operable to receive area information related to an area in image data of the frame that is included in the first image data stream;
a motion information extraction unit operable to extract motion information from the first image data stream;
a motion information estimation unit operable to estimate, based on the extracted motion information of the first image data stream, motion information of image data of a frame that is not included in a second image data stream with a second frame rate and a second resolution, the second frame rate being equal to or lower than the first frame rate, the second resolution being equal to or higher than the first resolution, and the image data having the second resolution; and

an image data generation unit operable to generate the image data of the frame that is not included in the second image data stream based on the second image data stream and the motion information estimated by said motion information estimation unit, the image data having the second resolution; and

a second distribution unit operable to distribute image data corresponding to the area specified in the area information received by said area receiving unit, out of image data included in the second image data stream and the image data generated by said image data generation unit, and

said image data stream receiving apparatus includes:

a first receiving unit operable to receive the first image data stream distributed from said first distribution unit;
an area transmission unit operable to accept a user specification of the area in the image data of the frame that is included in the first image data stream, and to transmit the area information; and
a second receiving unit operable to receive the image data distributed from said second distribution unit.

**33.** The image data stream generation system according to Claim 32,

wherein said image data stream receiving apparatus further includes:

a first display unit operable to display the first image data stream; and
a second display unit operable to display the image data received by said second receiving unit.

**34.** The image data stream generation system according to Claim 32,

wherein said motion information extraction unit is operable to extract the motion information from the first image data stream using a phase correlation method,

said motion information estimation unit has:

a high resolution frequency component extraction unit operable to extract a frequency signal component of the second image data stream by performing frequency transform on the second image data stream;
a difference image generation unit operable to generate a difference image based on the motion information of the first image data stream, the first image data stream, and the second image data stream, the difference image being a difference between the image data of the frame that is not included in the second image data stream and image data of a frame that is included in the second image data stream;

a difference image frequency component extraction unit operable to extract a frequency signal component of the difference image by performing the frequency transform on the difference image; and

a motion compensation unit operable to perform motion compensation for the image data of the frame that is not included in the second image data stream by determining a frequency signal component of the image data of the frame that is not included in the second image data stream based on the frequency signal component of the second image data stream and the frequency signal component of the difference image, the image data having the second resolution, and

said image data generation unit has:

a low resolution frequency component extraction unit operable to extract a frequency signal component of the first image data stream by performing the frequency transform on the first image data stream;

a synthesis unit operable to synthesize the frequency signal component of the motion-compensated image data with the second resolution and the frequency signal component of the first image data stream; and

an inverse frequency transform unit operable to perform inverse transform of the frequency transform on a frequency signal component obtained by the synthesis performed by said synthesis unit.

35. The image data stream generation system according to Claim 34,

wherein the frequency transform is orthogonal transform.

36. The image data stream generation system according to Claim 35,

wherein the orthogonal transform is discrete cosine transform.

37. The image data stream generation system according to Claim 35,

wherein the orthogonal transform is wavelet transform.

38. The image data stream generation system according to Claim 34,

wherein said motion information extraction unit is operable to extract the motion information from the first image data stream, using the phase correlation method that utilizes fast Fourier transform.

39. The image data stream generation system according to Claim 32,

wherein said motion information extraction unit has:

a first dynamic area extraction unit operable to extract dynamic areas from the first image data stream;

a second dynamic area extraction unit operable to extract a dynamic area and a background area from the second image data stream; and

a transform matrix estimation unit operable to estimate an Affine transform matrix for the dynamic areas of the first image data stream based on the extracted dynamic areas of the first image data stream,

said motion information estimation unit is operable to perform an operation using the Affine transform matrix on the dynamic area of the second image data stream, and to generate a dynamic area in the frame that is not included in the second image data stream, and

said image data generation unit is operable to superimpose the dynamic area estimated by said motion information estimation unit onto the background area extracted from the second image data stream by said second dynamic area extraction unit.

40. The image data stream generation system according to Claim 32,

wherein said motion information extraction unit has:

a characteristic point extraction unit operable to extract characteristic points from image data of each of frames included in the first image data stream; and

a motion vector extraction unit operable to associate the characteristic points between the frames, and to extract motion vectors,

said motion information estimation unit is operable to interpolate motion vectors of the frame that is not included in the second image data stream, based on the motion vectors extracted by said motion vector extraction unit, and

said image data generation unit has:

a polygon division unit operable to apply the characteristic points extracted by said characteristic point extraction unit to the second image data stream, and to obtain each area formed by connecting the characteristic points as a polygon area;

a dynamic area generation unit operable to perform morphing on the polygon area obtained by said polygon division unit based on the motion vectors estimated by said motion information estimation unit, and to generate a dynamic area of the frame that is not included in the second image data stream;

a background area extraction unit operable to extract a background area from the second image data stream; and

a superimposition unit operable to superimpose the dynamic area generated by said dynamic area generation unit onto the background area extracted by said background area extraction unit.

## FIG. 1

EP 1 583 357 A2

FIG. 2

# FIG. 3

(a)  Resolution

52

54

Time

(b)  Resolution

↓ Generation of high resolution images

56

Time

EP 1 583 357 A2

FIG. 4

(a)

Spatial frequency

High resolution camera

Low resolution camera

Temporal frequency

Generation of high resolution images

(b)

Spatial frequency

Temporal frequency

EP 1 583 357 A2

# FIG. 5

```
        ┌─────────────────────────────┐
        │           START             │
        │   (Frequency transform)     │
        └─────────────────────────────┘
                      │
                      ▼
        ┌─────────────────────────────┐
        │    Frequency transform      │──S2
        │    on low resolution image  │
        └─────────────────────────────┘
                      │
                      ▼
        ┌─────────────────────────────┐
        │    Frequency transform      │──S4
        │    on high resolution image │
        └─────────────────────────────┘
                      │
                      ▼
        ┌─────────────────────────────┐
        │   Motion vector estimation  │──S6
        └─────────────────────────────┘
                      │
                      ▼
        ┌─────────────────────────────┐
        │ Motion compensation for high│──S8
        │ resolution image of target frame │
        └─────────────────────────────┘
                      │
                      ▼
        ┌─────────────────────────────┐
        │ Synthesis of frequency signal│
        │ components of high resolution│──S10
        │ image and low resolution image│
        └─────────────────────────────┘
                      │
                      ▼
        ┌─────────────────────────────┐
        │  Inverse frequency transform│──S12
        └─────────────────────────────┘
                      │
                      ▼
        ┌─────────────────────────────┐
        │            END              │
        │   (Frequency transform)     │
        └─────────────────────────────┘
```

# FIG. 6

High resolution-low frame rate image stream (HRI)

52

16×16DCT

C[HRI]

Estimation of inter-frame difference

Inter-frame difference

16×16 DCT

C[Inter-frame difference]

Part that cannot be motion-compensated

Motion vector

Motion estimation (Phase correlation method)

Low resolution-high frame rate image stream (LRI)

54

Target frame

8×8 DCT

C[LRI]

C[Motion-compensated HRI]

56

High resolution image to be generated

16×16 IDCT

Synthesized spectra

Spectrum synthesis

EP 1 583 357 A2

# FIG. 7

# FIG. 8

START
(Affine transform)

↓

Extraction of dynamic areas
in low resolution image ⟋S24

↓

Extraction of background
area in high resolution image ⟋S26

↓

Extraction of dynamic areas
in high resolution image ⟋S28

↓

Estimation of
Affine transform matrix ⟋S30

↓

Image transform on dynamic
area in high resolution image ⟋S32

↓

Superimposition of image-transformed
dynamic areas in high resolution image
over background area ⟋S34

↓

END
(Affine transform)

FIG. 9

Low resolution and high frame rate image stream

74 Target frame 76

Estimation of transform matrix (Hi)

Hi

Background and dynamic area extraction processing

High resolution image

Image transform

Synthesis processing

High resolution image to be generated

56

54

52

High resolution and low frame rate image stream

72

Estimated high resolution image

High resolution background image

# FIG. 10

```
    START
  (Morphing)
       │
       ▼
┌──────────────────────────┐
│ Characteristic point     │  ⟋S42
│ extraction               │
└──────────────────────────┘
       │
       ▼
┌──────────────────────────┐
│ Motion vector extraction │  ⟋S44
└──────────────────────────┘
       │
       ▼
┌──────────────────────────┐
│ Motion information       │  ⟋S46
│ estimation               │
└──────────────────────────┘
       │
       ▼
┌──────────────────────────┐
│ Polygon division         │  ⟋S48
└──────────────────────────┘
       │
       ▼
┌──────────────────────────┐
│ Morphing processing      │  ⟋S50
└──────────────────────────┘
       │
       ▼
┌──────────────────────────┐
│ Background image         │  ⟋S52
│ generation               │
└──────────────────────────┘
       │
       ▼
┌──────────────────────────┐
│ Superimposition of       │  ⟋S54
│ morphing image and       │
│ background image         │
└──────────────────────────┘
       │
       ▼
    END
  (Morphing)
```

# FIG. 11

Low resolution and high frame rate image stream

Target frame

Detection of motion vectors by tracking characteristic points

High resolution image N-1　　　Morphing image　　　High resolution image N

High resolution background image → Synthesis processing → High resolution image to be generated

EP 1 583 357 A2

FIG. 12

FIG. 13

## FIG. 14A

## FIG. 14B

110

112

To Beam splitter 42

114

116

To Beam splitter 42

## FIG. 14C

117

118

To Beam splitter 42

# FIG. 15

120

| Multi sensor camera | 22 | Distribution server | 122 | Client apparatus | 124 | 36 |

**Multi sensor camera** 22

High resolution -low frame rate camera 28

Low resolution -high frame rate camera 30

**Distribution server** 122

High resolution image distribution unit 32

Dynamic area analysis unit 126

**Client apparatus** 124

Position specification unit 36 ← User input

High resolution image generation processing unit 128

High resolution Low frame rate

Motion & Corrected-pixel information

High resolution High frame rate

# FIG. 16

EP 1 583 357 A2